# EUROPEAN PATENT APPLICATION

(11) **EP 4 844 675 A1**
(43) Date of publication of application: **25.11.2026**
(21) Application number: 25787052.7
(22) Date of filing: 27.03.2025
(51) Int. Cl.: G06T 7/00, G06T 7/62

(54) **ELECTRODE INSPECTION APPARATUS**

(30) Priority: 08.04.2024 KR 20240047642
(71) Applicant: LG Energy Solution, Ltd., Seoul 07335 (KR)
(72) Inventor: KIM, Heejun, Daejeon 34122 (KR); KIM, Heeyong, Daejeon 34122 (KR); HA, Heonwook, Daejeon 34122 (KR); KIM, Yong Nam, Daejeon 34122 (KR); LEE, Yong Jun, Daejeon 34122 (KR)
(74) Representative: Plasseraud IP
(86) International application number: PCT/KR2025/003965
(87) International publication number: WO 2025/216460

(57) **Abstract**

The present invention provides an electrode inspection apparatus for visually inspecting whether an electrode is defective by photographing the electrode, an electrode inspection method for inspecting whether an electrode is defective by using the same, the electrode inspection apparatus including a transparent vision gripper for gripping one end of the electrode, wherein the vision gripper has an opening for exposing a predetermined area encompassing the two corners of the one end of the electrode.

## Description

### [TECHNICAL FIELD]

This application claims the benefit of priority based on Korean Patent Application No. 10-2024-0047642 filed on April 8, 2024, entire content disclosed in the document of the patent applications is comprised as a part of this specification.

The present invention relates to an inspection apparatus for inspecting an electrode and an electrode inspection method using the same. More specifically, the present invention relates to a visual inspection apparatus for inspecting whether a cut electrode has a dimensional defect, an inspection method using the same, and a battery manufacturing process including the same.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells have various structures depending on the method of manufacturing the electrode assembly accommodated therein. In particular, recently, high-capacity stack cell are often manufactured at a high speed using the zigzag stacking method, which alternately stacks anodes and cathodes between each layer of a separator folded in a zigzag pattern. The manufacturing process of manufacturing such stack cells includes a cutting step of cutting electrodes, a loading step of loading the electrodes into a magazine, and a step of supplying to a stacking device and assembling the electrodes with a separator.

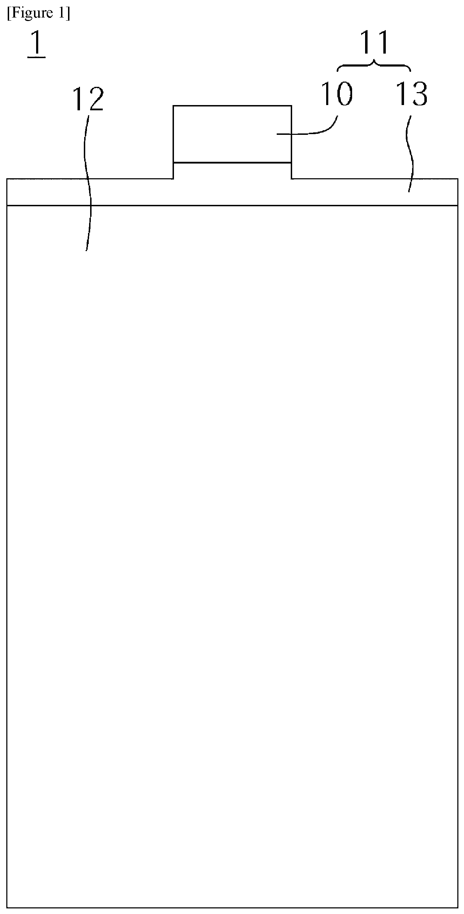

FIG. 1 illustrates an electrode after cutting is completed. Referring to FIG. 1, an electrode 1 generally supplied for stacking an electrode assembly has a coated area 12 coated with an active material to induce a battery reaction, a non-coated area 11 without the active material, and an insulating layer 13 coated at the boundary between the coated area 12 and the non-coated area 11 to prevent short circuits.

The electrode 1 is subjected to laser cutting to produce a tab 10 protruding from one side of the electrode 1, and the cut electrode 1 undergoes a dimensional inspection step to detect defects in dimensions such as the width and position of the tab 10 and the overall width of the electrode 1 immediately after the cutting step.

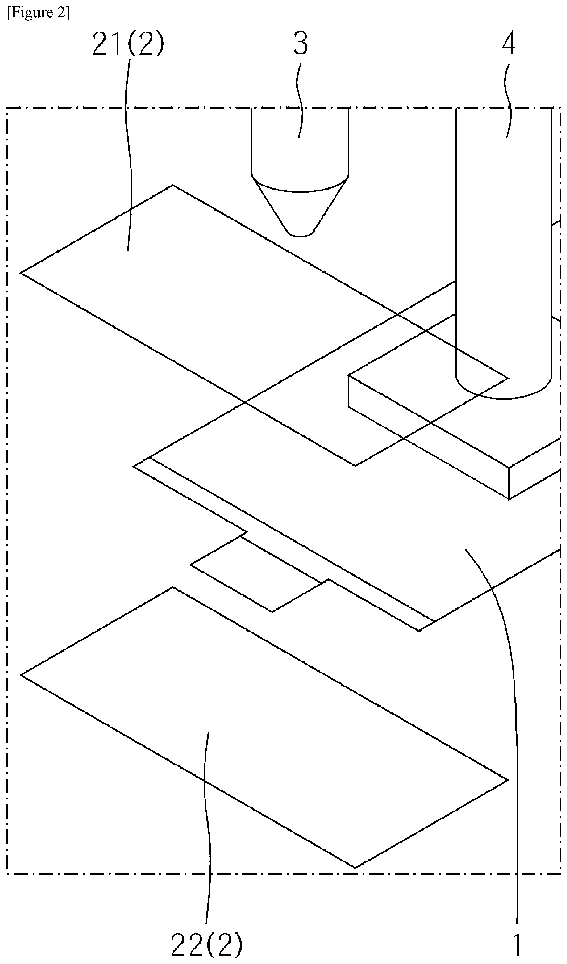

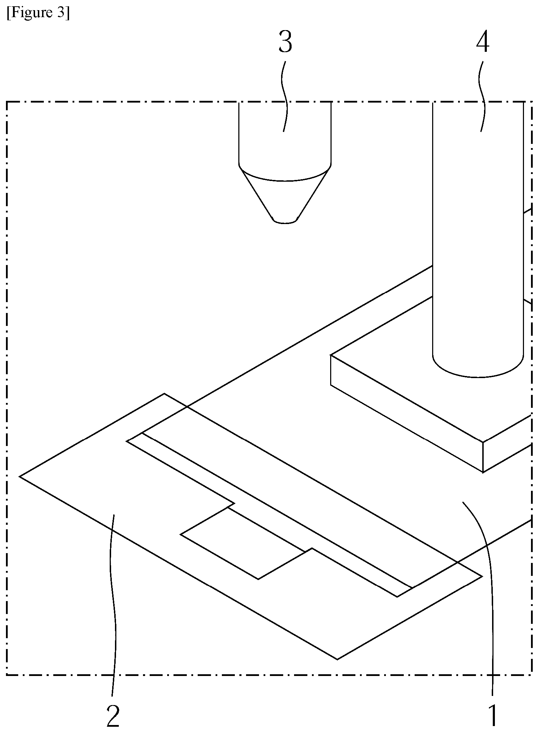

FIGS. 2 and 3 illustrate a process of gripping the electrode of FIG. 1 for visual inspection. Referring to FIGS. 2 and 3, the electrode 1 is transported with the center portion thereof adsorbed to the transport apparatus 4 immediately after the cutting step. Here, in order to accurately perform dimensional inspection without being affected by sagging or curling of the electrode 1, a pair of vision grippers 2 move up and down to grip one end of the electrode 1. The vision gripper 2 is made of a transparent synthetic resin material such as acrylic resin, and presses the one end of the electrode 1 flatly while allowing visual inspection using a camera 3.

Meanwhile, the vision gripper 2 moves laterally together with the electrode 1 at a speed same as that of the electrode 1 being moved by the transport apparatus 4 for faster inspection, and grips and releases the electrode 1 by moving up and down.

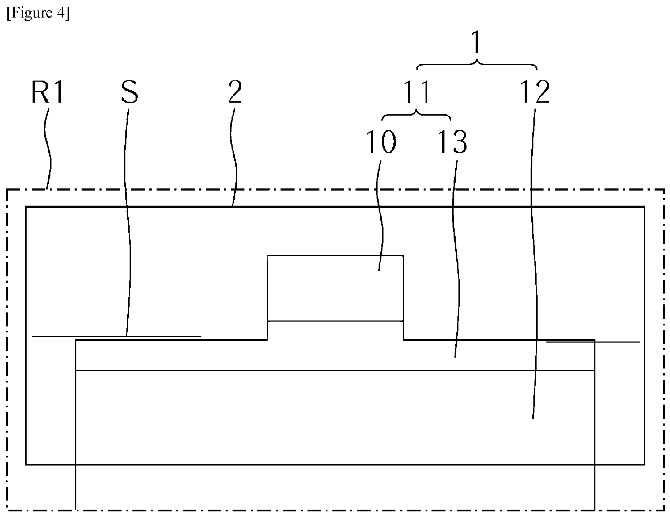

FIG. 4 illustrates an image photographed for dimensional inspection of an electrode. Referring to FIG. 4, as the vision gripper 2 grips and releases the electrode 1 while moving laterally together with the electrode 1, a fine friction is applied in the lateral direction between the vision gripper 2 and the electrode 1, and the friction leaves a scratch S along the transport direction of the electrode 1 on the vision gripper 2.

When the friction of the coated area 12 is accumulated on the scratch S, the dark active material is introduced into the scratch S in the form of powder, and the scratch S may form an increasingly clear line. The problem is that the edges of the electrode 1 and the tab 10 cannot be accurately detected due to the scratch S, and thus, the dimensional defect of the electrode 1 is over-detected.

Meanwhile, the electrode 1 may also undergo a corner inspection step to detect defects due to deformation and/or damage of the vulnerable corner thereof. The corner inspection may be performed immediately after the electrode 1 is cut and/or immediately before being supplied for stacking.

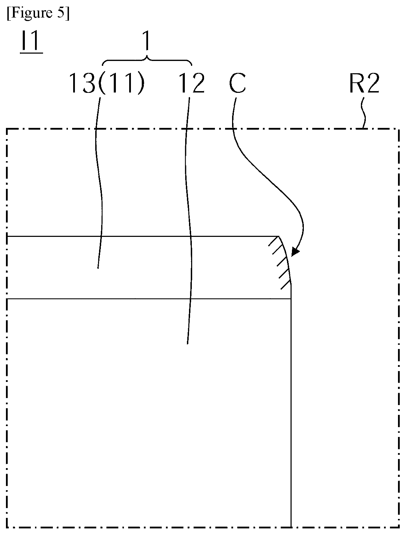

FIG. 5 illustrates an image photographed for corner inspection of an electrode. Referring to FIG. 5, in order to detect deformation and/or damage of the corner of the electrode 1, the electrode 1 is photographed and the image is used in a method of detecting the position and angle of the corner. In order to determine the exact position and angle of the corner, a method of detecting the horizontal and vertical axes forming the corner and detecting the intersection point and the angle formed by the axes is mainly used.

However, due to the thin non-coated area 11, even when there is no defect in the electrode 1, a fine curl C may occur at the corner of the electrode 1. As the curl C occurs, the boundary of the corner becomes blurred due to the shadow, making it difficult to accurately detect the horizontal and vertical axes such that the corner defect of the electrode 1 is over-detected.

### [DISCLOSURE]

### [TECHNICAL PROBLEM]

In order to solve above-described problems of prior art, it is an object of the present invention to provide an electrode inspection apparatus and an electrode inspection method capable of accurately detecting dimensional defects of an electrode.

Specifically, it is an object of the present invention to provide an electrode inspection apparatus and an electrode inspection method capable of preventing over-detection of defects due to scratches caused by friction with the electrode while gripping the electrode to prevent sagging or curling of the electrode.

It is also an object of the present invention to provide an electrode inspection apparatus capable of visually inspecting the electrode quickly and accurately while moving along the electrode being transported in the lateral direction, and an electrode inspection method using the same.

It is another object of the present invention to provide a battery manufacturing process in which dimensional defects of the electrode may be accurately detected during the process of cutting and supplying the electrode for lamination.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of an electrode inspection apparatus for visually inspecting whether an electrode is defective by photographing the electrode, including: a transport apparatus transporting the electrode; a transparent vision gripper for gripping one end of the electrode; and a camera for photographing a predetermined area of interest encompassing two corners of the one end of the electrode with the vision gripper gripping the one end of the electrode, wherein the vision gripper may include an upper gripper and a lower gripper moving up and down and gripping the electrode from thereabove and thereunder, at least one of the upper gripper and the lower gripper including an opening exposing the predetermined area encompassing the two corners of the one end of the electrode.

According to the present invention, provided is the electrode inspection apparatus capable of more accurate visual inspection by avoiding generation of scratches in a portion of the vision gripper corresponding to a corner of the electrode, which is inspected for defects.

The transport apparatus may transport the electrode while being adsorbed to a portion of the electrode inwardly spaced apart from an edge of the electrode by a predetermined distance. Here, deformation may occur at the edge of the electrode, such as sagging downward or curling. However, the electrode may be photographed in a flat, spread state by the vision gripper by gripping one end of the electrode.

The vision gripper may move together with the electrode at a speed same as that of the electrode being moved by the transport apparatus. Specifically, according to an embodiment of the present invention, the vision gripper may move up and down to grip or release the electrode while moving together with the electrode at the speed same as that of the electrode being moved by the transport apparatus. Accordingly, the visual inspection is performed simultaneously with the transport of the electrode such that the electrode may be produced at a high speed and inspected for defects.

Here, since the electrode and the vision gripper both move laterally and are in contact with each other, damage that may occur to the electrode or the vision gripper may be prevented by providing the opening.

The electrode may include a coated area with an active material coated thereon and a non-coated area without the active material coated thereon along the one end, and the opening exposes at least a portion of a boundary between the coated area and the non-coated area. In such case, scratches caused by the active material are prevented, and the phenomenon of the scratches becoming darker due to the accumulation of the active material powder may also be prevented.

The opening may be provided at least in the lower gripper. In such case, the active material powder generated by the friction between the vision gripper and the electrode may be discharged in downward direction through the opening, and a recognition error due to the accumulation of the active material powder may be prevented.

Here, it is preferable that the opening encompasses an area that does not overlap with the electrode. That is, since the opening is completely open in upward and downward directions without being blocked by the electrode, the discharge of the active material powder may be performed more smoothly.

According to an embodiment of the present invention, the opening may be provided on both of the upper gripper and the lower gripper. Accordingly, the upper gripper is not scratched by the electrode, and the active material powder may be discharged through the opening of the lower gripper. Here, each of the upper gripper and the lower gripper may define a portion of an edge of the opening and include a corner support supporting an inner portion of each of the two corners of the electrode. The corner may support the inner side of the corner in order to prevent the corner of the electrode from sagging as the opening is provided.

According to an embodiment of the present invention, the portion of the edge of the opening defined by the corner support may be spaced apart from the edge of the electrode by a predetermined distance or less. For example, the opening may have a bent shape including a first extension extending along lengthwise direction of the electrode and a second extension extending along widthwise direction of the electrode.

The vision gripper may include a synthetic resin material. According to an embodiment of the present invention, the vision gripper may include an acrylic resin or polymethyl methacrylate (PMMA) material. In order to prevent scratches on the vision gripper, the vision gripper may be made of a material having high hardness such as tempered glass, which may cause durability or cost issues. However, according to the present invention, since the opening is provided and there is no concern about scratches on the vision gripper, the vision gripper may be manufactured with a durable and economical synthetic resin material.

The present invention also provides an electrode inspection method using the electrode inspection apparatus.

The electrode inspection method includes, in order,: a gripping step of a vision gripper moving up and down and gripping one end of an electrode from thereabove and thereunder; a photographing step of a camera photographing an area of interest; and a releasing step of the vision gripper moving up and down and releasing the electrode.

The vision gripper may move together with the electrode at a speed same as that of the electrode being moved by a transport apparatus in the photographing step.

In addition, the vision gripper may move up and down to grip or release the electrode while moving together with the electrode at the speed same as that of the electrode being moved by the transport apparatus in the gripping step and the release step.

Here, the electrode inspection method may further include: a determination step of determining whether the electrode is defective.

Whether the width of the electrode is defective may be determined in the determination step. Here, since the two widthwise ends of the electrode are identifiable within the area where the opening is provided, the width of the electrode may be accurately recognized without recognition errors due to scratches caused by accumulation of active material.

In addition, the electrode includes an electrode tab protruding from the one end of the electrode, and at least one of: whether a position of the electrode tab with respect to two corners of the electrode is defective; and whether a width of the electrode tab is defective may be determined in the determination step. Here, since the vision gripper is made of a transparent material, the two widthwise ends of the tab may be accurately recognized, and since the vision gripper has the opening, the two widthwise ends of the electrode may be accurately recognized without recognition errors such that the width of the electrode tab and the position of the electrode tab may be accurately recognized.

The present invention also provides a battery manufacturing process including the electrode inspection method.

The battery manufacturing process including an electrode inspection method of claim 13, the battery manufacturing process includes: a cutting step of cutting a metal foil material to form an electrode; an inspection step of performing the electrode inspection method to determine whether the electrode is defective; and a loading step of loading the electrode into a magazine when the electrode may be determined to be a non-defective product in the inspection step.

According to an embodiment of the present invention, even immediately after the cutting step when the electrode is most vulnerable to sagging or curling, the dimension of the electrode may be accurately inspected by the vision gripper gripping the electrode.

### [ADVANTAGEOUS EFFECTS]

The present invention provides an electrode inspection apparatus and an electrode inspection method capable of accurately detecting dimensional defects of an electrode, wherein the electrode is gripped to prevent sagging or curling thereof while preventing over-detection of defects due to scratches or active material caused by friction with the electrode.

The present invention may also provide an electrode inspection apparatus and an electrode inspection method using the same capable of moving laterally together along with an electrode being transported, and visually inspecting the electrode quickly and accurately.

The present invention may also provide a battery manufacturing process in which dimensional defects of the electrode may be accurately detected during the process of cutting and supplying the electrode for lamination.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates an electrode after cutting is completed.
FIGS. 2 and 3 illustrate a process of gripping the electrode of FIG. 1 for visual inspection.
FIG. 4 illustrates an image photographed for dimensional inspection of an electrode.
FIG. 5 illustrates an image photographed for corner inspection of an electrode.
FIG. 6 is a flowchart illustrating an electrode manufacturing process according to an embodiment of the present invention.
FIGS. 7 and 8 illustrate electrodes before and after a cutting step, respectively, according to an embodiment of the present invention.
FIG. 9 is a flow chart illustrating a dimensional inspection method of an electrode according to an embodiment of the present invention.
FIGS. 10 and 11 illustrate a process of performing a first inspection according to an embodiment of the present invention.
FIGS. 12 and 13 illustrate images photographed for dimensional inspection of an electrode according to an embodiment of the present invention.
FIG. 14 is a flow chart illustrating a corner inspection method of an electrode according to an embodiment of the present invention.
FIG. 15 illustrates an image photographed for corner inspection of an electrode in a first inspection according to an embodiment of the present invention, and FIG. 16 illustrates an image photographed for corner inspection of an electrode in a second inspection according to an embodiment of the present invention.
FIG. 17 is a schematic diagram illustrating a second step of corner inspection of an electrode according to an embodiment of the present invention.

### [DESCRIPTION OF REFERENCE NUMERALS]

1: electrode
   10: tab
   11: non-coated area
   12: coated area
   13: insulating layer (insulating material)
2: vision gripper
   200: opening
      201: first extension
      202: second extension
   203: corner support
   21: upper gripper
   22: lower gripper
3: camera
4: transport apparatus
R1: first area of interest
R2: second area of interest
S: scratch
C: curl
I1: image of the product to be inspected
I2: image of non-defective product
B: background image
D1: tab width
D2: tab shoulder width
D3: electrode width

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein comprise expressions in plural form unless the context explicitly dictates otherwise. Terms such as "consists of" or "comprises" used herein should not be construed as necessarily comprising all of the elements or steps described in the specification, and should be construed as not comprising some of the elements or steps, or comprising additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [BATTERY MANUFACTURING PROCESS]

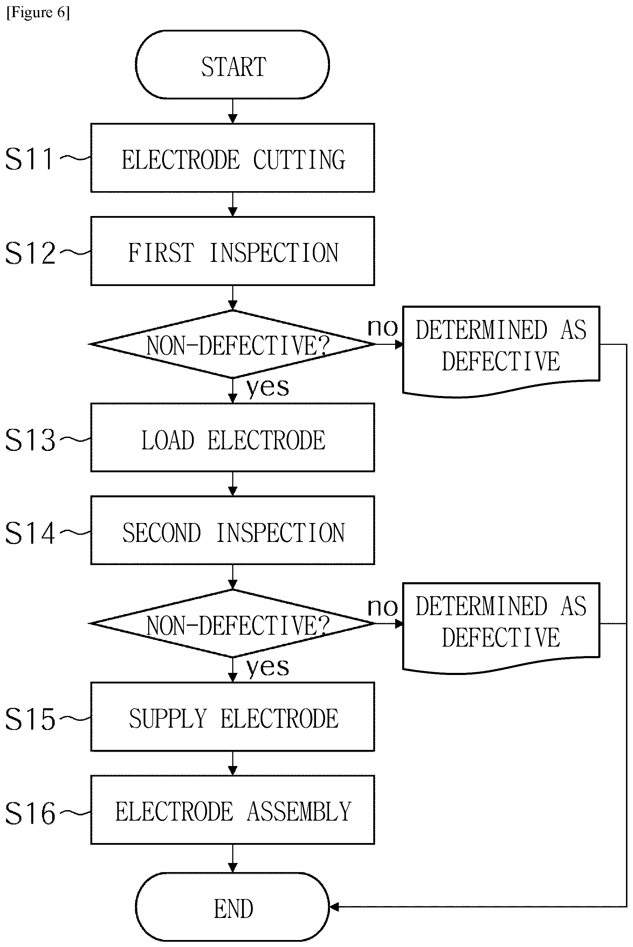

Hereinafter, with reference to FIGS. 6 to 8, a battery manufacturing process according to an embodiment of the present invention will be described. The embodiment exemplifies a battery manufacturing process by way of a zigzag stacking process in which an anode and a cathode are alternately interposed and stacked between each layer of a separator folded in a zigzag manner. However, it should be clearly understood through the following description that the battery manufacturing process according to the present invention is not limited thereto and may include all types of processes including a process of cutting an electrode and supplying the same for stacking.

FIG. 6 is a flowchart illustrating an electrode manufacturing process according to an embodiment of the present invention. Referring to FIG. 6, the battery manufacturing process according to an embodiment of the present invention includes: a cutting step S11 of cutting a metal foil material to form an electrode; a first inspection step S12 of determining whether the electrode is defective; a loading step S13 of loading the electrode into a magazine when the electrode is determined to be a non-defective product in the first inspection step; a second inspection step S14 of determining whether the electrode is defective; and a supply step S15 of supplying the electrode to a stacking device when the electrode is determined to be a non-defective product in the second inspection step. Thereafter, the electrode may be assembled to form an electrode assembly (S16).

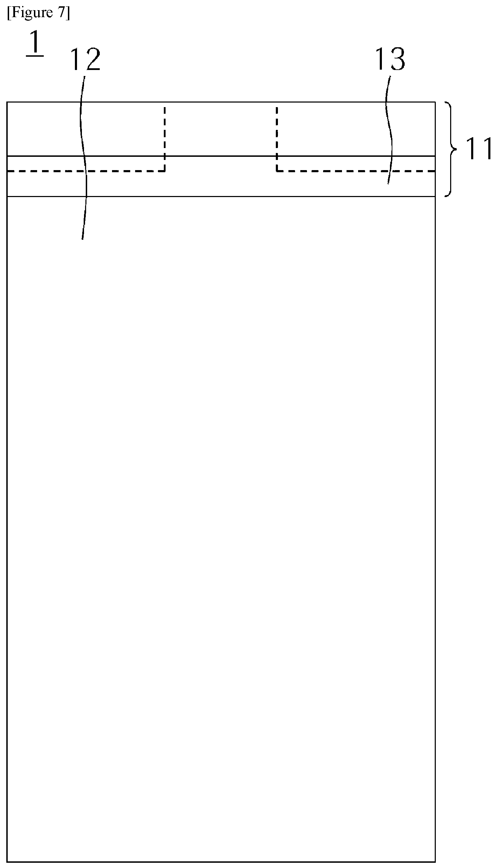

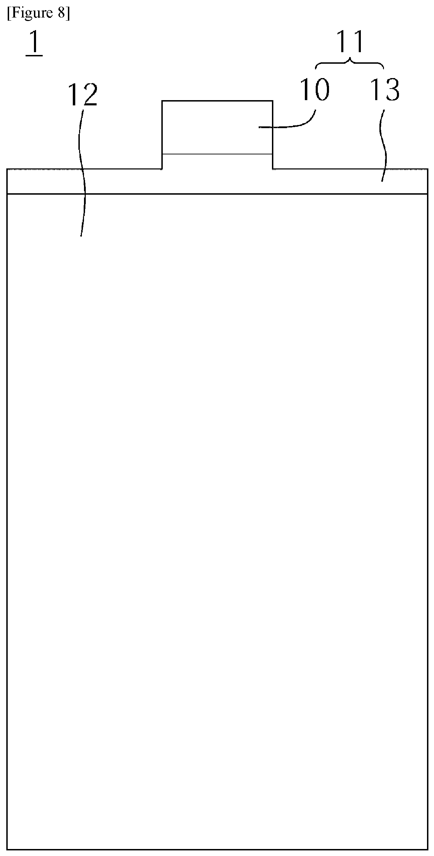

FIGS. 7 and 8 illustrate electrodes before and after a cutting step, respectively, according to an embodiment of the present invention. Referring to FIGS. 7 and 8, the electrode 1 before cutting may include: a coated area 12 with an active material coated thereon; and a non-coated area 11 without an active material coated thereon and extending along one end of the electrode 1. The electrode 1 may also be provided with an insulating material 13 coated to cover a boundary between the coated area 12 and the non-coated area 11. The insulating material 13 may be coated partly on the non-coated area 11 and the remainder on the coated area 12.

In the cutting step S11, the electrode 1 may be cut to form a tab 10 protruding from one end thereof. Here, the electrode 1 may be cut such that the portion of the one end excluding the tab 10 protruding therefrom is covered with the insulating material 13. That is, the electrode 1 may be cut such that the coated area 12 or the non-coated area 11 at the portion of the one end excluding the tab 10 is not exposed and is covered with the insulating material 13.

The cutting step S11 may be performed using a laser cutting method. However, the cutting step S11 may be performed using any other cutting method suitable for cutting the metal foil material into a desired shape. Regardless of the cutting method used in the cutting step S11, it is likely that the electrode 1 is deformed due to a load such as heat or friction immediately after the cutting step S11.

### [DIMENSIONAL INSPECTION METHOD OF ELECTRODE]

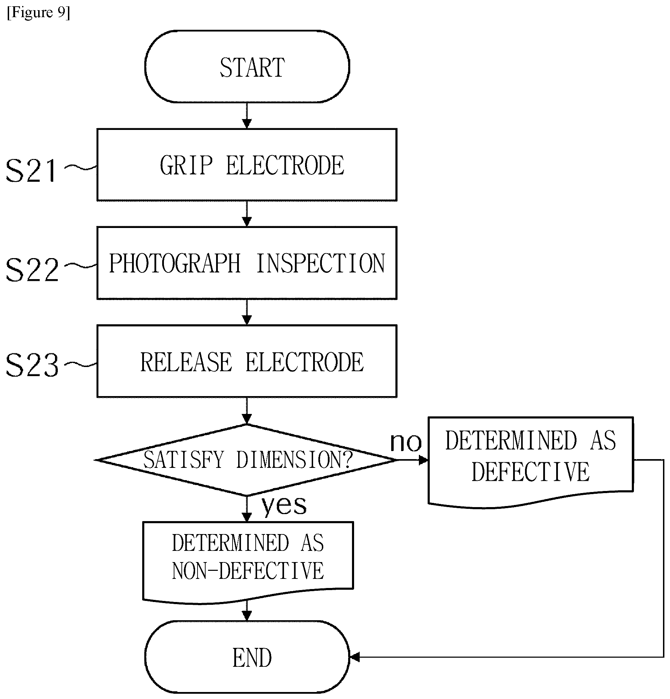

Hereinafter, with reference to FIGS. 9 to 13, a dimensional inspection method of an electrode according to an embodiment of the present invention will be described in detail. The dimensional inspection method of an electrode according to the embodiment is characterized by a structure of a vision gripper that grips one end of the electrode from above and below.

Referring again to FIG. 6, the dimensional inspection method of an electrode according to the embodiment may be performed as part of the first inspection step S12.

FIG. 9 is a flow chart illustrating a dimensional inspection method of an electrode according to an embodiment of the present invention. Referring to FIG. 91, the dimensional inspection method of an electrode according to an embodiment of the present invention includes, in order,: a gripping step S21 of a vision gripper moving up and down and gripping one end of the electrode from thereabove and thereunder; a photographing step S22 of a camera photographing an area of interest of interest; and a release step S23 of the vision gripper moving up and down and releasing the electrode.

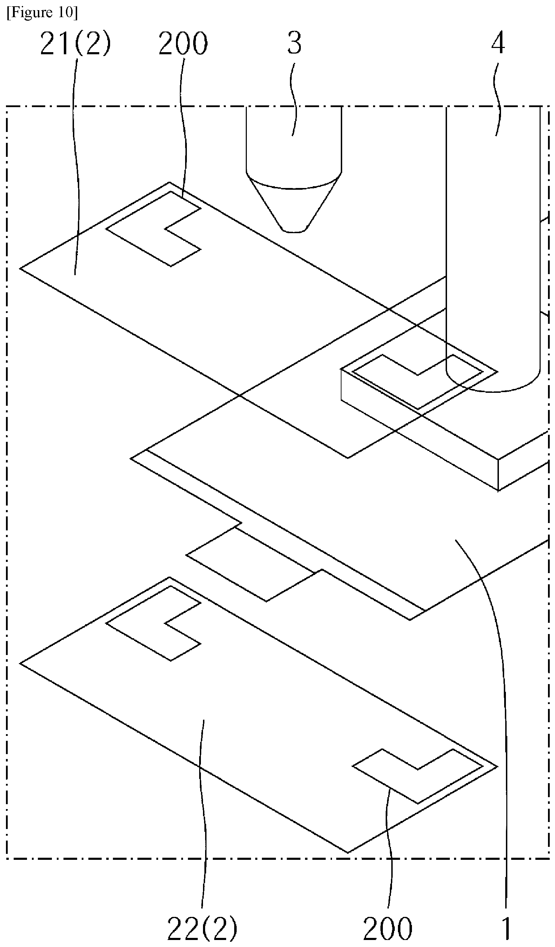

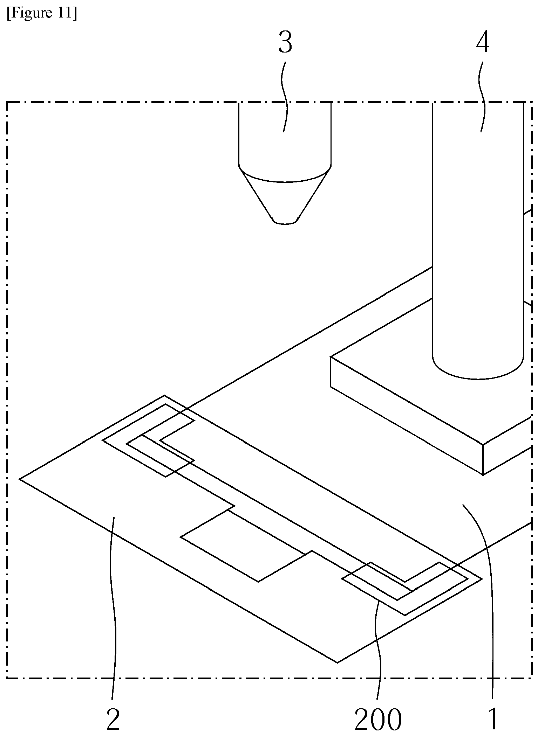

FIGS. 10 and 11 illustrate a process of performing a first inspection according to an embodiment of the present invention. Referring to FIGS. 10 and 11, an electrode inspection apparatus for performing a dimensional inspection method of the electrode includes: a transport apparatus 4 for transporting the electrode 1; a transparent vision gripper 2 for gripping one end of the electrode 1; and a camera 3 for photographing a predetermined first area of interest R1 encompassing two corners of the one end of the electrode 1 with the vision gripper 2 gripping the one end of the electrode 1.

The vision gripper 2 includes an upper gripper 21 and a lower gripper 22 capable of moving up and down from above and below the electrode 1.

The transport apparatus 4 may transport the electrode 1 while being adsorbed to a portion of the electrode 1 inwardly spaced apart from the edge of the electrode 1 by a predetermined distance. Here, the edge of the electrode 1 may be deformed in downward direction such as sagging or curling. In particular, since the electrode 1 is cut immediately before, the possibility of sagging or curling is even greater. Here, the vision gripper 2 may grip the one end of the electrode 1 such that the electrode 1 may be photographed in a flat, spread state.

The vision gripper 2 may be capable of moving together with the electrode 1 at a speed same as that of the electrode 1 being moved by the transport apparatus. 4. That is, referring back to FIG. 9, in the photographing step S22, the vision gripper 2 may move together with the electrode 1 at the speed same as that of the electrode 1 being moved by the transport apparatus 4.

Referring back to FIGS. 10 and 11, it is preferable that the vision gripper 2 is configured to move up and down to grip or release the electrode 1 while moving together with the electrode 1 at the speed same as that of the electrode 1 being moved by the transport apparatus 4. Accordingly, the electrode dimensional inspection is performed simultaneously with the transport of the electrode 1 such that the electrode 1 may be produced at a high speed and inspected for defects.

That is, referring back to FIG. 9, in the gripping step S21 and the release step S23, the vision gripper 2 may move up and down to grip or release the electrode 1 at the speed same as that of the electrode 1 being moved by the transport apparatus 4.

Here, since the electrode 1 and the vision gripper 2 both move laterally and are in contact with each other, scratches may occur on the electrode 1 or the vision gripper 2. In particular, when the active material powder accumulates on these scratches, the edge of the electrode 1 may be inaccurately recognized, which may result in over-detection of defects.

To prevent this, at least one of the upper gripper 21 and the lower gripper 22 according to an embodiment of the present invention is provided with an opening 200 that exposes a predetermined area including the two corners of the one end of the electrode 1.

A pair of openings 200 may be provided two portions corresponding to the two corners of the electrode 1, respectively.

It is preferable that the opening 200 is provided at least in the upper gripper 21. Accordingly, the two corners of the electrode 1 may be photographed as are without being covered by the vision gripper 2, and the active material does not accumulate in scratches at the portions corresponding to the two corners of the electrode 1 in the vision gripper 2 such that the edge of the electrode 1 may be accurately recognized.

In addition, it is preferable that the opening 200 is provided at least in the lower gripper 22. In such case, the active material powder generated by the friction between the vision gripper 2 and the electrode 1 may be discharged in downward direction through the opening 200, and recognition errors due to the accumulation of the active material powder may be prevented.

Here, it is preferable that the opening 200 encompasses an area that does not overlap with the electrode 1. That is, since the opening 200 an area that is not covered by the electrode 1 and is completely open in upward and downward directions, the discharge of the active material powder may be smoother.

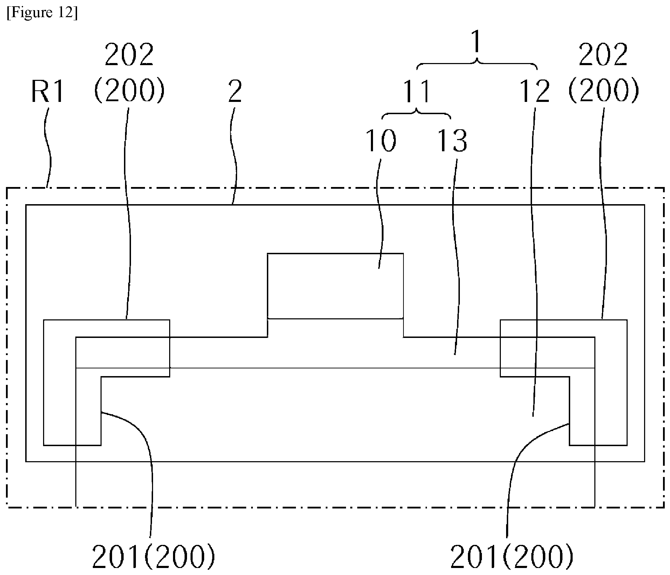

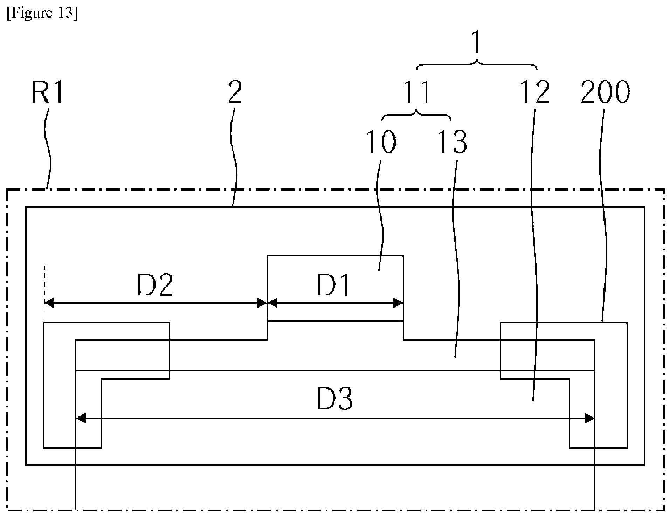

FIGS. 12 and 13 illustrate images photographed for dimensional inspection of an electrode according to an embodiment of the present invention. Referring to FIGS. 12 and 13, the opening 200 according to an embodiment of the present invention may be provided in both the upper gripper 21 and the lower gripper 22. Accordingly, the upper gripper 21 is not scratched by the electrode 1, and the active material powder may be discharged through the opening of the lower gripper 22.

Here, the upper gripper 21 and the lower gripper 22 may defines a portion of an edge of the opening 200 and may include a corner support 203 supporting an inner portion of each the two both corners of the electrode 1. The corner support 203 protrudes toward the two corners so as to grip and support the inner portion of the two corners of the electrode 1 from above and below, thereby minimizing the phenomenon of the two corners sagging or curling in the opening 200.

According to the embodiment, the opening 200 may have a bent shape including a first extension 201 extending along lengthwise direction of the electrode 1 and a second extension 202 extending along widthwise direction of the electrode 1. Here, the corner support 203 may be a corner constituting an inner edge of the opening 200 extending in widthwise direction and lengthwise direction.

Here, it is preferable that the corner support 203 is spaced apart from the edge of the electrode 1 by a predetermined distance or less so as to sufficiently support the two corners of the electrode 1.

The vision gripper 2 may include a synthetic resin material. According to an embodiment of the present invention, the vision gripper 2 may include an acrylic resin or polymethacrylic acid methyl (PMMA) material. In order to prevent scratches on the vision gripper 2, the vision gripper 2 may be made of a material having high hardness such as tempered glass, which may cause durability or cost issues. However, according to the present invention, since the opening 200 is provided and there is no concern about scratches on the vision gripper 2, the vision gripper 2 may be manufactured with a durable and economical synthetic resin material.

Referring back to FIG. 9 along with FIG. 13, the dimensional inspection method of the electrode according to the embodiment may further include a determination step of determining defectiveness of the electrode 1.

In the determination step, the defectiveness of the width D3 of the electrode 1 may be determined. Here, since the two widthwise ends of the electrode 1 are identifiable within the area where the opening 200 is provided, the width D3 of the electrode 1 may be accurately recognized without recognition errors caused by the active material accumulated in the scratches.

In addition, in the determination step, at least one of: whether the position of the tab 10 with respect to two corners of the electrode 1 is defective; and whether the width of the tab 10 is defective may be determined. Specifically, in the determination step, the tab width D1 and the tab shoulder width D2, that is, the distance from the widthwise end of the electrode 1 to the tab 10, may be measured. Here, since the vision gripper 2 is made of a transparent material, the two widthwise ends of the tab 10 may be accurately recognized, and since the vision gripper 2 has the opening 200, the two widthwise ends of the electrode 1 may be accurately recognized without recognition errors, and the tab width D1 and the tab shoulder width D2 may be accurately recognized.

### [ELECTRODE CORNER INSPECTION METHOD]

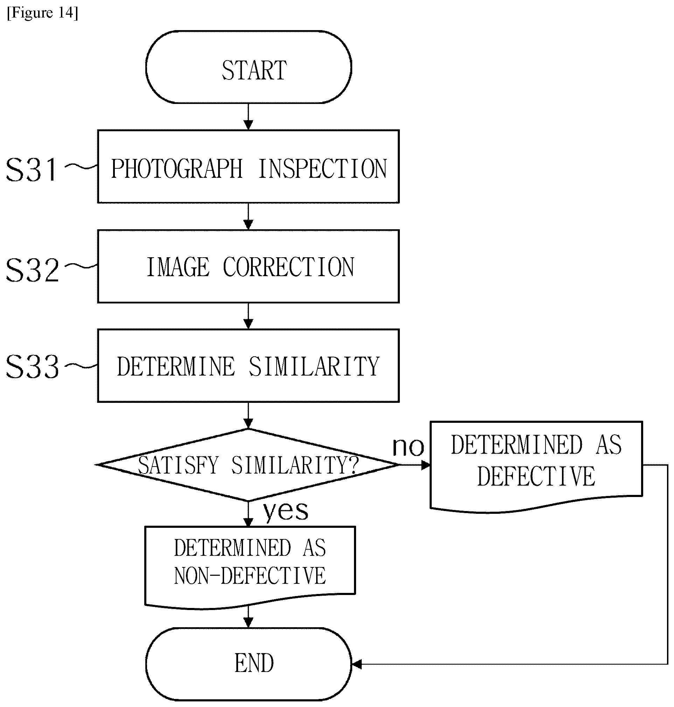

Hereinafter, with reference to FIGS. 14 to 17, the corner inspection method of the electrode according to the embodiment will be described in detail. The present invention is characterized in that the defectiveness of the electrode is decided based on the similarity determined by comparing the image of the product to be inspected obtained by photographing the electrode to that of the non-defective product and/or defective product learned in advance.

Referring back to FIG. 6, the corner inspection method of the electrode according to the embodiment may be performed as a part of at least one of the first inspection step S12 and the second inspection step S14, and preferably may be included in both the first inspection step S12 and the second inspection step S14.

FIG. 14 is a flow chart illustrating a corner inspection method of an electrode according to an embodiment of the present invention. Referring to FIG. 14, the corner inspection method of the electrode according to an embodiment of the present invention includes, in order,: a first step S31 of photographing a predetermined second area of interest including a corner of the electrode to obtain an image of the product to be inspected; a second step S33 of determining the similarity between the image of the product to be inspected and the image of the non-defective product using an image processing device that has learned the image of the non-defective product; and a third step of determining the defectiveness of the electrode based on the similarity.

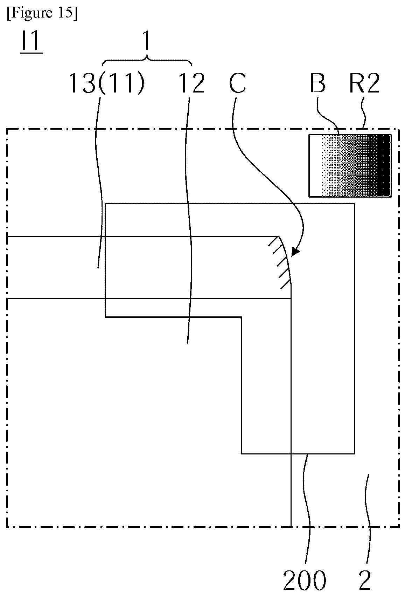

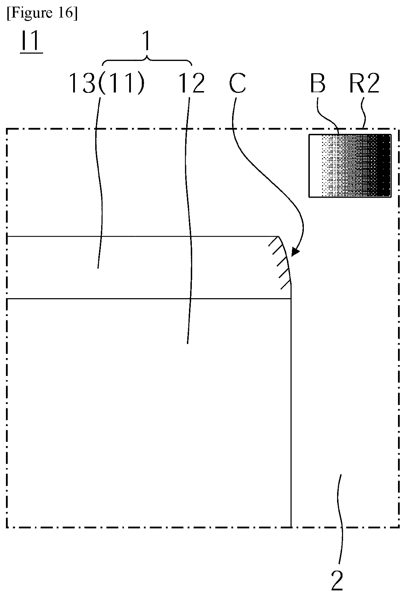

FIG. 15 illustrates an image photographed for corner inspection of an electrode in a first inspection according to an embodiment of the present invention, and FIG. 16 illustrates an image photographed for corner inspection of an electrode in a second inspection according to an embodiment of the present invention. Referring to FIGS. 15 and 16, since the corner of the electrode 1 is a portion of the non-coated area 11 where the active material is not coated, the corner of the electrode 1 is vulnerable to deformation or damage. Therefore, it is necessary to detect defects caused by deformation or damage. Accordingly, the corner inspection method of the electrode according to the embodiment is to detect deformation or damage by photographing the corner of the electrode 1.

In order to achieve this, in the first step S31, it is preferable that the first area of interest R2 includes at least one corner of the non-coated area 11.

It is also preferable that the first area of interest R2 also includes a portion of the background on which the electrode 1 is placed and photographed. This is because it is necessary to identify the shape of the corner of the electrode 1.

In the first step S31, together with the electrode 1, a predetermined background image B provided on the background of the electrode 1 may be photographed. Accordingly, the image I1 of the product to be inspected may be simultaneously acquired as a single image that includes the corner of the electrode 1 and the background image B.

The background image B must have a shape or color scheme that is known in advance, just as a screen adjustment image. Specifically, the background image B may be an image having at least one of known brightness, contrast, saturation and color tone. As described below, the background image B may be a standard for correcting the image I1 of the product to be inspected by homogenizing the image I1 of the product to be inspected in relation to the image of the non-defective product such that the image I1 of the product to be inspected may be compared with the image of the non-defective product regardless of the shooting conditions.

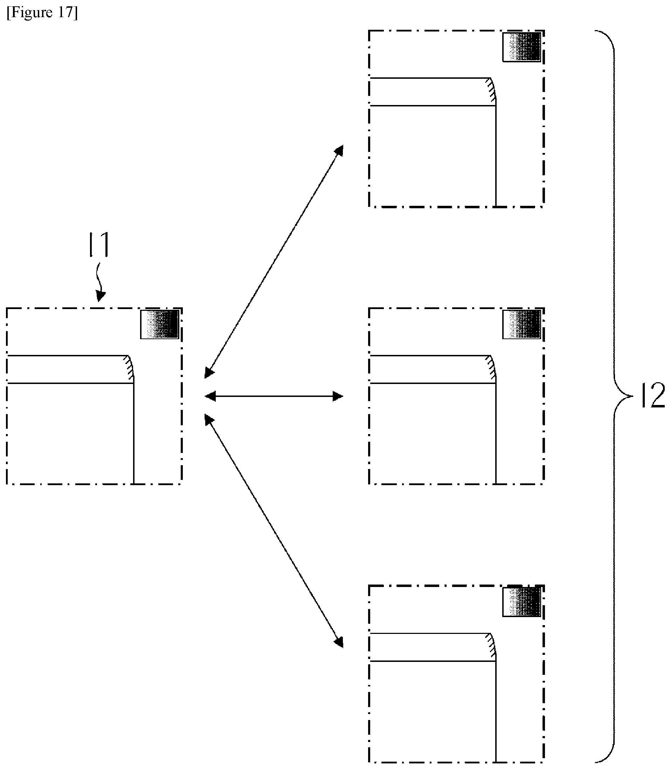

FIG. 17 is a schematic diagram illustrating a second step of corner inspection of an electrode according to an embodiment of the present invention. Referring to FIG. 17, it is preferable that the processing device learns a plurality of images I2 of the non-defective product. Accordingly, only the part related to determination of the defectiveness of the electrode 1 may be reflected to the determination of the defectiveness without being affected by various peripheral secondary factors that may cause differences between images of the electrode that may be regarded as a non-defective product.

Here, according to the embodiment, in the second step S33, the defectiveness may be determined by one similarity for each of the plurality of images I2 of non-defective product, resulting in multiple similarities.

According to a modified example, in the second step S33, the similarity may be a comprehensive single similarity between the plurality of images I2 of non-defective product and the image I1 of the product to be inspected.

In the second step S33, it is preferable that at least one of: alignment, brightness, contrast, saturation and hue is not reflected in the determination of the similarity between the image I2 of the non-defective product and the image I1 of the product to be inspected. This is to compensate for the fact that the shooting conditions of the image I1 of the product to be inspected may differ from the shooting conditions of the image I2 of the non-defective product due to physical variables such as lighting or angle.

For example, according to an embodiment of the present invention, between the first step S31 and the second step S33, an image correction step S32 may be further included to correct the image I1 of the product to be inspected to homogenize at least one of alignment, brightness, contrast, saturation and hue of the image I2 of the non-defective product and the image I1 of the product to be inspected.

Specifically, in order to achieve this, the correction may be performed based on at least one of brightness, contrast, saturation and hue of the background image B shown in the image I1 of the product to be inspected. The image correction step S32 may be performed in a manner of adjusting at least one of brightness, contrast, saturation and hue of the image I1 of the product to be inspected such that at least one of brightness, contrast, saturation and hue of the background image B shown in the image I1 of the product to be inspected becomes the same as a known one.

According to other embodiments of the present invention, in the second step S33, the image I1 of the product to be inspected may be compared to an image of a defective product rather than an image of a non-defective product, and thus, the similarity between the image I1 of the product to be inspected and the image of the defective product may be determined. According to this, the type of defect of the electrode 1 may be identified depending on which of the images of the defective product has the highest similarity with the image I1 of the product to be inspected such that inspection may be performed by specifying the type of defect to be detected from the beginning, and it is also possible to detect the type of defect together with the presence or absence of defects.

Here, it is also desirable that the processing device learns a plurality of images of the defective product in advance. In addition, the plurality of images of the defective product may be images of electrodes that all have the same type of defect, or images of electrodes that have different defects. The former may be used when targeting and detecting a specific type of defect, and the latter may be used to identify the type of defect of the electrode 1 based on which of the images of the product to be inspected I1 has the highest similarity.

Referring back to FIG. 14, the third step according to an embodiment of the present invention may be performed in a manner that a non-defective product determination is made when the similarity is greater than or equal to a predetermined value, and a defective product determination is made when the similarity is less than or equal to a predetermined value. In other embodiments of the present invention where an image of a defective product is used instead of that of a non-defective product, the method may be performed in a manner that a non-defective product determination is made when the similarity is less than or equal to a predetermined value, and a defective product determination is made when the similarity is greater than or equal to a predetermined value.

The type of defect of the electrode 1 to be detected in the inspection method according to the present invention is not particularly limited as long as the defect is visually or optically identifiable.

According to an embodiment of the present invention, in the third step, the deformation of the electrode 1 may be determined. The deformation of the electrode 1 may include various deformations that may be regarded as defects such as folding, tearing and crumpling. In order to achieve this, the image of the non-defective product may be an image of an electrode without such deformation.

In addition, in the third step, the detachment of the coating of the insulating material 13 may be determined. In order to achieve this, the image of the non-defective product may be an image of an electrode without the detachment of the coating.

According to an embodiment of the present invention, in the third step, the defectiveness of the electrode 1 may be determined based on the sum or average of the plurality of similarities. In such case, it is possible to prevent a local similarity or difference between a specific image among the plurality of images I2 of the non-defective product and the image I1 of the product to be inspected from excessively influencing the determination result.

Alternatively, in the third step, defectiveness of the electrode 1 may be determined based on the maximum value among the plurality of similarities, thereby preventing over-detection of the defectiveness of the electrode 1.

Alternatively, in the third step, the defectiveness of the electrode 1 may be determined based on the minimum value among the plurality of similarities, thereby minimizing the possibility of a defective product passing inspection.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being comprised in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode inspection apparatus for visually inspecting whether an electrode is defective by photographing the electrode, comprising:
a transport apparatus transporting the electrode;
a transparent vision gripper for gripping one end of the electrode; and
a camera for photographing a predetermined area of interest encompassing two corners of the one end of the electrode with the vision gripper gripping the one end of the electrode,
wherein the vision gripper comprises an upper gripper and a lower gripper moving up and down and gripping the electrode from thereabove and thereunder, at least one of the upper gripper and the lower gripper comprising an opening exposing the predetermined area encompassing the two corners of the one end of the electrode.

2. The electrode inspection apparatus of claim 1, wherein the transport apparatus transports the electrode while being adsorbed to a portion of the electrode inwardly spaced apart from an edge of the electrode by a predetermined distance.

3. The electrode inspection apparatus of claim 1, wherein the vision gripper moves together with the electrode at a speed same as that of the electrode being moved by the transport apparatus.

4. The electrode inspection apparatus of claim 3, wherein the vision gripper moves up and down to grip or release the electrode while moving together with the electrode at the speed same as that of the electrode being moved by the transport apparatus.

5. The electrode inspection apparatus of claim 1, wherein the electrode comprises a coated area with an active material coated thereon and a non-coated area without the active material coated thereon along the one end, and
the opening exposes at least a portion of a boundary between the coated area and the non-coated area.

6. The electrode inspection apparatus of claim 1, wherein the opening is provided at least in the lower gripper.

7. The electrode inspection apparatus of claim 6, wherein the opening encompasses a area that does not overlap with the electrode.

8. The electrode inspection apparatus of claim 1, wherein the opening is provided on both of the upper gripper and the lower gripper, and
each of the upper gripper and the lower gripper defines a portion of an edge of the opening and comprises a corner support supporting an inner portion of each the two corners of the electrode.

9. The electrode inspection apparatus of claim 8, wherein the portion of the edge of the opening defined by the corner support is spaced apart from the edge of the electrode by a predetermined distance or less.

10. The electrode inspection apparatus of claim 1, wherein the opening comprises a first extension extending along lengthwise direction of the electrode and a second extension extending along widthwise direction of the electrode.

11. The electrode inspection apparatus of claim 1, wherein the vision gripper comprises a synthetic resin material.

12. The electrode inspection apparatus of claim 11, wherein the vision gripper comprises an acrylic resin or polymethyl methacrylate (PMMA) material.

13. An electrode inspection method using an electrode inspection apparatus of claim 1, the electrode inspection method comprising, in order,:
a gripping step of a vision gripper moving up and down and gripping one end of an electrode from thereabove and thereunder;
a photographing step of a camera photographing an area of interest; and
a releasing step of the vision gripper moving up and down and releasing the electrode.

14. The electrode inspection method of claim 13, wherein the vision gripper moves together with the electrode at a speed same as that of the electrode being moved by a transport apparatus in the photographing step.

15. The electrode inspection method of claim 14, wherein the vision gripper moves up and down to grip or release the electrode while moving together with the electrode at the speed same as that of the electrode being moved by the transport apparatus in the gripping step and the release step.

16. The electrode inspection method of claim 13, further comprising: a determination step of determining whether the electrode is defective.

17. The electrode inspection method of claim 16, wherein whether a width of the electrode is defective is determined in the determination step.

18. The electrode inspection method of claim 16, wherein the electrode comprises an electrode tab protruding from the one end of the electrode, and
at least one of: whether a position of the electrode tab with respect to two corners of the electrode is defective; and whether a width of the electrode tab is defective is determined in the determination step.

19. A battery manufacturing process comprising an electrode inspection method of claim 13, the battery manufacturing process comprising:
a cutting step of cutting a metal foil material to form an electrode;
an inspection step of performing the electrode inspection method to determine whether the electrode is defective; and
a loading step of loading the electrode into a magazine when the electrode is determined to be a non-defective product in the inspection step.
